(19) Europäisches Patentamt
European Patent Office
Office européen des brevets

(11) EP 2 428 495 B1

(12) EUROPEAN PATENT SPECIFICATION

(45) Date of publication and mention of the grant of the patent:
**01.05.2019 Bulletin 2019/18**

(51) Int Cl.:
***C03B 37/012*** *(2006.01)*

(21) Application number: **11180370.6**

(22) Date of filing: **07.09.2011**

(54) **Apparatus for fabricating a glass rod and method of same**

Vorrichtung zur Herstellung einer Glasstange und Verfahren dafür

Appareil de fabrication d’une tige en verre et son procédé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.09.2010 JP 2010200504**
**06.09.2011 JP 2011194105**

(43) Date of publication of application:
**14.03.2012 Bulletin 2012/11**

(73) Proprietor: **Shin-Etsu Chemical Co., Ltd.**
**Chiyoda-ku,**
**Tokyo 100-0004 (JP)**

(72) Inventor: **Otosaka, Tetsuya**
**Annaka-shi, Gunma 3790195 (JP)**

(74) Representative: **Kramer Barske Schmidtchen**
**Patentanwälte PartG mbB**
**European Patent Attorneys**
**Landsberger Strasse 300**
**80687 München (DE)**

(56) References cited:
**JP-A- 61 014 149**
**JP-A- 63 195 139**
**US-A- 5 314 517**
**US-A- 6 134 922**
**US-B1- 6 220 057**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 428 495 B1

**Description**

BACKGROUND OF THE INVENTION

Field of the Invention

The present invention relates to an apparatus for fabricating a glass rod and a method of the same, in particular, to an apparatus and method for fabricating a glass rod having a desirable diameter by feeding a relatively large diameter glass preform such as an optical fiber glass ingot in a furnace, heating the preform in the furnace and drawing the heated preform from the furnace.

Description of the Related Art

Japanese Patent Laid-Open No. 2006-193397 discloses a method for fabricating a glass rod having a desirable diameter by measuring a diameter of a preform during drawing at a region where a deformation (diameter reduction) is progressing and a diameter at a region where the diameter reduction is almost completed, and adjusting a feed speed and a drawing speed of the glass preform with respect to a furnace based on these measured diameters.

The description of conventional art in Japanese Patent Laid-Open No. H11-011970(1999) a method of pre-measuring a diameter of a glass preform along a longitudinal direction thereof, determining a ratio between a feed speed and a drawing speed of the preform, and fabricating a constant diameter glass rod based on the ratio.

Japanese Patent Laid-Open No. 2006-219331 discloses suppressing a diameter fluctuation of a drawn glass rod caused by a shifting of a reference position defining a feed speed and a drawing speed of a glass preform as a drawing process progress, by changing the amount of a feed and the reference diameter distance of the glass preform.

Conventionally, a ratio of a target diameter of a glass rod with respect to a diameter of a glass preform (referred to as a diameter reduction ratio below) has been about 20% to 50% and relatively small. Accordingly, the control method of Japanese Patent Laid-Open No. 2006-193397 could suppress the fluctuation of diameter to a required level. Recently, however, a larger size optical fiber preform is required, and a glass rod having a relatively small diameter deformation, in which a diameter reduction ratio is about 60% to 95%, is required. For example, when a 160mm to 170mm diameter glass preform is drawn into a 150mm diameter glass rod, the diameter reduction ratio is 88% to 94%.

To implement the feed back control disclosed in Japanese Patent Laid-Open No. 2006-193397, it is necessary to measure a diameter at around a position where a diameter is substantially reduced in a diameter decreasing region. In case of a relatively large diameter reduction ratio, however, a position where a diameter is substantially reduced is adjacent the heater in a furnace. Accordingly, it is difficult to directly measure a diameter at this position. If the diameter used for the feedback control is measured at a location spaced from the heater to some extent so as to prevent an affection of the heater, the response of the feedback control could be lagged. Thus the feed back control may not be appropriately implemented. As a result, a large fluctuation can be generated in a drawn glass rod.

According to the method disclosed in Japanese Patent Laid-Open No. H11-011970(1999), a relatively desirable diameter fluctuation value can be obtained even at a diameter reduction ratio of 60% to 95% in the case of a stable constant diameter glass preform. The method, however, may cause an unacceptable diameter fluctuation (specifically, more than ±1%) at an end portion of a usable region in a drawn glass rod at the end of the drawing process, when the glass preform has a relatively large diameter fluctuation in a longitudinal direction thereof.

The method disclosed in Japanese Patent Laid-Open No. 2006-219331 can suppress a diameter fluctuation of a glass rod. In the method, however, a criterion for changing the reference diameter position is indefinite, and an unacceptable diameter fluctuation may be generated depending on a condition of a diameter fluctuation of a glass preform. In addition, in the embodiment of the publication, a 130mm diameter glass preform is drawn into a 30mm diameter glass rod, that is, a diameter reduction ratio is considerably small such as 23%. The publication fails to disclose a method for suppressing a diameter fluctuation of a drawn glass rod in case of a relatively large diameter ratio such as 60 to 95%.

JP 61-14149 (A) and US 6,134,922 each disclose a method for fabricating a glass rod trying to suppress diameter fluctuations of a drawn glass rod.

SUMMARY OF THE INVENTION

The present invention provides an apparatus and a method for fabricating a glass rod capable of suppressing a diameter fluctuation of a drawn glass rod even in case of a relative large diameter reduction ratio between a glass preform and a glass rod, such as 60 to 95%.

The present invention in its first aspect provides a method of fabricating a glass rod as specified in claims 1 to 7. The present invention in its second aspect provides an apparatus as specified in claim 8.

The diameter for determining a drawing speed is acquired from measured diameter data of a glass preform before being drawn, and a distance from a reference position of a heater with respect to a diameter acquisition position for acquiring the diameter is adjusted depending on a diameter fluctuation of the glass preform. Thereby, the diameter acquisition position can be modified depending on a diameter reference distance, which changes in accordance with the diameter fluctuation of the glass preform. As a result, a drawing speed can be determined based on a diameter responding to the drawing reference distance, so that a diameter fluctuation of a drawn glass rod in a longitudinal direction of the glass rod can be suppressed.

Further features of the present invention will become apparent from the following description of exemplary embodiments (with reference to the attached drawings).

BRIEF DESCRIPTION OF THE DRAWINGS

Fig.1 is a view schematically showing an apparatus for fabricating a glass rod according to an embodiment of the present invention;

Fig.2 is a schematic view for explaining a drawing reference distance in a diameter decreasing region;

Fig.3A is a graph showing a relation between a drawing reference distance and a feed speed in case where 160,170 and 180mm diameter glass preforms are drawn into 150mm target diameter glass rods;

Fig.3B is a graph showing a relation between a drawing reference distance and a feed speed in case where 160,170 and 180mm diameter glass preforms are drawn into 110mm target diameter glass rods;

Fig.4 is a flow chart showing an example of a drawing processing by the controller of Fig.1;

Fig.5 is a graph showing a diameter fluctuation of a glass preform before and after drawing in Example 1;

Fig.6 is a graph showing a diameter fluctuation of a glass preform before and after drawing in Comparative example 1;

Fig.7 is a graph showing a diameter fluctuation of a glass preform before and after drawing in Comparative example 2; and

Fig.8 is a graph illustrating a diameter fluctuation of a glass preform before and after drawing.

DESCRIPTION OF THE EMBODIMENTS

An embodiment of the present invention will be described below with reference to the attached drawings. Fig.1 schematically shows an apparatus for fabricating a glass rod according to an embodiment of the present invention. The fabricating apparatus has a feeding mechanism 101 and a drawing mechanism 110, which are disposed on a frame FR vertically extending, respectively, a furnace 120 disposed on the frame between the feeding mechanism 101 and the drawing mechanism 110, and a controller 130.

The feeding mechanism 101 has a screw shaft 102 vertically extending and rotatably supported, a motor 103 for driving the screw shaft 102, a movable member 104 into which the screw shaft 102 is screwed, and a chucking mechanism 105 which is disposed on the movable member 104 and holds an upper end portion of an optical fiber glass preform 201.

The drawing mechanism 110 has a screw shaft 112 vertically extending and rotatably supported, a motor 113 for driving the screw shaft 112, a movable member 114 into which the screw shaft 112 is screwed, and a chucking mechanism 115 which is disposed on the movable member 114 and holds a lower end portion of the optical fiber glass preform 201.

The furnace 120 has an annular shaped of heater 121 therein, and heats an optical fiberglass preform 201 passing through a central portion of the heater 121.

The controller 130 is constituted of hardware such as a processor and a memory, and required software, and is electrically connected to the motors 103 and 113, and the furnace 120. Specifically, the controller 130 controls rotational velocities of the motors 103 and 113, and a temperature in the furnace 120.

Drawing of a glass preform by the apparatus in Fig.1 will be described. First, a glass preform 201 having a relatively large diameter is fed into the furnace120 through the top portion thereof by the feeding mechanism 101. The glass preform 201 fed into the furnace 120 is drawn from the furnace 120 through a bottom portion thereof by the drawing mechanism 110 so that the glass preform 201 is drawn so as to be a relatively small diameter glass rod. At that time, the feeding mechanism 101 and the drawing mechanism 110 are controlled so that a ratio V2/V1 between a feed speed V1 and a drawing speed V2 of the glass preform 201 becomes a value $(D/d)^2$ which is defined from the glass preform diameter D and the glass rod target diameter d. That is, a feed speed V1 and a drawing speed V2 are controlled so that a relation defined by the following formula (1) is satisfied.

$$V2 / V1 = (D/d)^2 \quad (1)$$

In the present embodiment, a feed speed V1 of the glass preform is set to a constant value for a drawing control. As the glass preform diameter D for determining the drawing speed V2, the preform diameter before the glass preform is drawn at a diameter acquisition position which is defined with respect to a reference position of the furnace from a measured diameter data which is obtained to measure the glass preform along a longitudinal direction of the glass preform. A distance from a reference position in the furnace to the diameter acquisition position is determined so as to vary depending on the glass preform diameter fluctuation before being drawn in a longitudinal direction thereof. In particular, the distance from a reference position in the furnace to the diameter acquisition position is determined so as to be equal to a drawing reference distance, which will be described later.

Next, a drawing reference distance will be discussed with reference to Fig.2. The glass preform 201 is fed into the furnace 120 through the top portion of the furnace 120 at a feed speed V1, heated by the heater 121, and drawn from the furnace 120 through the bottom portion of the furnace 120. Here, a tension is induced on the glass preform 201 by setting V2>V1. A heated and softened region of the glass preform 201 is stretched due to the tension so that a diameter decreasing region 202 where a diameter is gradually reduced in a longitudinal direction is formed. A diameter of the glass preform 201 decreases in the diameter decreasing region 202 thereby a relatively small diameter glass rod 203 is formed.

The glass preform 201 fed into the furnace 120 is heated by the heater 121 so that a temperature of the preform 201 in the longitudinal direction reaches a maximum temperature at a position below a middle position C of the heater 121 and gradually decreases from the maximum temperature position downward. Accordingly, a position PM where a deformation rate (an amount of diameter reduction per unit length in the longitudinal direction) is largest is located at below the heater middle position C at any time.

Here, VM indicates a volume of a glass preform 201 from the heater middle position C to the position PM, ND indicates a diameter of the glass preform 201 before being drawn, L indicates a drawing reference distance. In the present embodiment, a drawing reference distance L is defined by the following formula (2).

$$L = VM / (\pi \times (ND/2)^2) \quad (2)$$

A drawing reference distance L is defined based on a distance from the heater middle position C to the position on the glass preform being drawn, and varies depending on a feed speed and a diameter of a glass preform before being drawn, as described later. That is, a drawing reference distance L is a distance between the heater middle position C and a specific position which is defined depending on a deformation condition of the diameter decreasing region on the glass preform. Accordingly, a drawing reference distance L is depending on the position PM in the diameter decreasing region 202, where the deformation rate is largest.

In the present embodiment, a diameter of the glass preform corresponding to a drawing reference distance is used for the drawing control. By controlling the diameter of the glass preform corresponding to the drawing reference distance, a diameter of a drawn glass preform can be controlled with higher precision. The diameter fluctuation region, however, is located close to the heater 121 so that it is difficult to directly measure its shape during drawing. Accordingly, in the present embodiment, the drawing reference distance can be calculated or estimated from a preliminary experiment or data when being drawn in a steady state.

The present inventor investigated a relation between a drawing reference distance L, a feed speed V1 and a diameter D of a glass preform before being drawn. In particular, a glass preform diameter D, a glass rod target diameter d and a feed speed V1 were set to a variety of values, and a drawing reference distance L was measured from an actual shape of a diameter decreasing region 202. The results are shown in Figs.3A and 3B. Fig.3A shows a relation between a drawing reference distance and a feed speed in a case where 160,170 and 180mm diameter glass preforms were drawn into 150mm target diameter glass rods, respectively. Fig.3B shows a relation between a drawing reference distance and a feed speed in a case where 160,170 and 180mm diameter glass preforms were drawn into 110mm target diameter glass rods. As can be seen from the relation between a feed speed and a glass preform diameter with respect to a plurality of drawing reference distances, a drawing reference distance L varies depending on a glass preform diameter and feed speed.

It can be seen from a relation between a feed speed and a glass preform diameter with respect to a plurality of drawing reference distances shown in Figs.3A and 3B, a drawing reference distance varies depend on a glass preform diameter and a feed speed in various way. The bigger the glass preform diameter before being drawn, the longer the drawing reference distance. And, the greater the feed speed, the longer the drawing reference distance.

As can be seen from Fig.3A and Fig.3B, keeping a feed speed and a glass preform diameter during drawing at constant values can provides a constant length of a drawing reference distance. However, if a diameter fluctuation of the glass preform in a longitudinal direction thereof exists, a drawing reference distance may be fluctuated even though keeping the feed speed of the glass preform constant. For this reason, in the present embodiment, a feed speed is kept constant during drawing of a glass preform and a diameter acquisition position on the glass preform is changed depending on the diameter fluctuation of the glass preform. That is, in the present embodiment, a distance from a heater reference position to a diameter acquisition position of the glass preform is set so as to be equal to a fluctuating drawing reference distance.

To determine a drawing reference distance, data defining a relationship between a diameter of a glass preform before being drawn and a drawing reference distance, as shown in Figs.3A and 3B can be used.

It is difficult to prepare drawing reference distance data with respect to all of the fluctuated diameters of the glass preform. For this reason, in the present embodiment, by interpolating between data in the diameter and drawing reference distance data as shown in Figs.3A and 3B, a drawing reference distance is determined at a given position on the glass preform in a longitudinal direction of the glass preform thereby determining a diameter acquisition position when the given position reaches the heater middle position C.

In a case where a diameter of the usable region in a glass preform substantially linearly varies, drawing reference distances at two points of a start position and a drawing ending position of the usable region is determined using diameter drawing reference distance data.

And, by linearly interpolating the drawing reference distance at these two points, a drawing reference distance at a given position between the two points can be calculated. That is, in a case where a glass preform diameter before being drawn is linearly varied, a drawing reference distance at a given position between the two points is also linearly changed. In addition, in a case where a glass preform diameter does not vary in the longitudinal direction, a drawing reference distance at a given position can be obtained by dividing a usable region into a plurality of interpolation regions, determining drawing reference distances at both ends points of each of the interpolation regions from the diameter drawing reference distance data, and interpolating the drawing reference distance at both ends points of each of the interpolation regions. Note that an interpolating manner is not limited to this manner, and another interpolating manner can be employed.

Next, an example of a drawing process by the above controller will be described with reference to Fig.4. First, a glass preform 201 of which diameter having premeasured is set to the apparatus of Fig.1, and the heater 121 is switched on and the motors 103 and 113 are driven to feed the glass preform 201 into the furnace 120 (S1).

If starting to heat the glass preform from a drawing start position of a usable region of a glass preform which can be used for forming the glass rod, a diameter fluctuation may be generated on the drawing start side of the preform because a temperature distribution of the preform is not yet in a steady state. To prevent this, it is necessary to start to heat the glass preform so as to make a temperature distribution at the drawing start position steady before a drawing start position of the usable region of the glass preform reaches the heater middle position C in furnace120. A length of a region between a position to start heating the glass preform and the drawing start position of the usable region of the glass preform (which is referred to as a preliminary heating region below) is preferably set to be equal to or more than a length of the heater from a point of view to stabilize a temperature distribution. Extending it more than necessary is disadvantageous in production efficiency because of a large loss of the glass preform, so it is preferably set to less than three times of the length of the heater.

Next, acquisition of a current position of the glass preform 201 in the longitudinal direction relative to the furnace 120 is started (S2). The current position of the glass preform 201 relative to the heater 121 can be acquired using, for example, a rotational position detector (not shown in the figures) incorporated in the motor 103. Next, whether the drawing start position of the glass preform 201 reaches the position where is spaced from the heater middle position C by a predetermined distance which is set to a specific drawing reference distance is judged. If it reaches there, a drawing processing is started (S4).

With a drawing process being started, a feed speed V1 is set to a predetermined constant value (S5). Next, a diameter acquisition position of the glass preform before being drawn is determined (S6). Here, a method of determining a diameter acquisition position will be described, for example, in a case where a length of a usable portion in a glass preform is 1000mm, a drawing reference distance at a drawing start position is 40mm, and a drawing reference distance at a drawing ending position is 60mm. The drawing start position of the usable region in the glass preform is set to a position below the heater middle position C by 40mm. A location of the drawing ending position with respect to the heater middle position C when a diameter at the drawing ending position is acquired is positioned below a location of the drawing start position with respect to the heater middle position C by 20mm (=60-40) . Accordingly, a total amount of feed of the glass preform is set to 1020mm. And, multiplying an actual amount of feed of the glass preform by 1000/1020 gives an interpolated diameter acquisition position.

With the drawing processing being started, a diameter at a calculated diameter acquisition position is acquired from the measured diameter data (S7). A drawing speed V2 is determined using the acquired diameter by the formula (1) (S8). And, a control command in accordance with the determined feed speed V1 and drawing speed V2 is sent to the motors 103 and 113 (S9).

Next, whether the glass preform reaches an ending position is judged (S10). If it does not reach there, the steps S5 to S8 are repeated. If it reaches there, the drawing processing is terminated (S11).

The method of the present embodiment provides a great technical effect especially in a case where the glass rod target diameter d is from 60 to 95% of the glass preform diameter D. As can be seen from a comparison between Fig.3A and Fig.3B, an amount of change of drawing reference distance associated with variation of a feed speed and a diameter becomes relatively larger in a drawing process with a relative large diameter reduction ratio in which a 160mm diameter glass preform is drawn into a 150 mm diameter glass rod and the ratio is 94%. Specifically, in the case of such a relatively large diameter reduction ratio, the present invention is so useful in drawing. Also, a change of drawing reference distance associated with a variation in a glass preform diameter can be seen even in the drawing of a relative small diameter reduction ratio such as from a 180mm diameter to a 110mm diameter as shown in Fig.3B, however, the amount of the change is relatively small. In a case of less than 60% of a diameter reduction rate, a conventional method can be used, and the method of the present invention also can provide a desirable result. On the other hand, in case of over 95% of a diameter reduction rate, it is difficult to maintain an appropriate drawing load during drawing so that a drawn glass rod may have some deflection.

Conventionally, if a diameter fluctuation of a glass rod when the diameter is reduced in a drawing furnace becomes large, the diameter fluctuation can be modified by re-drawing using an existing glass lathe.

However, in a case of where a glass rod diameter is more than 110mm, it becomes difficult or impossible to re-drawing because heat efficiency falls in re-drawing using the existing glass lathe. Accordingly, in a case where a glass rod target diameter is over 110mm, a glass rod having a decreased diameter fluctuation can not be fabricated without a drawing process of the present invention. In such case, the present invention provides effectiveness.

[Example]

Example 1

A glass preform having a tapered portions at both ends thereof, a 1000mm length of usable region thereof, a diameter of 160mm at a drawing start position of the usable region, a diameter of 172mm at a drawing ending position of the usable region, and a diameter in the usable region linearly varying in the longitudinal direction was drawn under conditions where a heater length is 130mm, a glass rod target diameter is a 150mm, and a feed speed is 10mm/min. A drawing reference distance was determined from the data of Fig.3A, thereby drawing reference distances were set to 33mm and 52mm on the drawing start side and on the drawing ending side, respectively. A 200mm length of the preliminarily heated region was set on the drawing start side. The glass preform was set so that a drawing start position of the usable region on the drawing start side was located above the heater middle position C by 167mm and drawing was started at a heater temperature of 2050 degrees Celsius. A diameter portion larger than 150mm of the tapered portion on the drawing start side was drawn at a drawing speed calculated using the formula (1) while a target diameter of the potion was set to the 150 mm glass rod target diameter.

A feed amount of the glass preform was set to 0mm at the time point that the 200mm length of preliminarily heated region passed through the heater middle position C. From here, the glass preform was moved 1019mm. The feed amount of 1019mm was determined from the usable region length of 1000mm + (the ending position drawing reference distance of 52mm - the start position drawing reference distance of 33mm). During this time, a diameter acquisition distance with respect to a given position on the preform was interpolated by multiplying an actual feed amount of the glass preform by 1000/1019. And, a drawing speed was calculated by the formula (1) using a diameter acquired at the interpolated diameter acquisition distance from the measured diameter data of the glass preform. In addition, another 200mm length region was further drawn after a drawing of the usable region. During this time, a feed speed was maintained at 9.0mm/min, which is a final feed speed of the usable region. The larger diameter portion than 150mm of the tapered portion on the drawing ending side was drawn at a drawing speed calculated using the formula (1) while a target diameter of the potion was set to the 150 mm. As a result, as shown in Fig.5, a glass rod having a significantly reduced diameter fluctuation, in which a difference between a maximum diameter and a minimum diameter is approximately 0.9mm, could be obtained.

Comparative Example 1

A glass preform having tapered portions at both ends thereof, a 1000mm length usable region of the glass preform, a diameter of 160mm at a drawing start position of the usable region, a diameter of 170.5mm at a drawing ending position of the usable region, and a diameter in the usable region linearly varying in the longitudinal direction was drawn under conditions where a heater length is 130mm, a glass rod target diameter is a 150mm, and a feed speed is 10mm/min. A preliminarily heated region on the drawing start side was set to 200mm in length. A drawing reference distance was set to 41mm determined from the data of Fig.3A by using a diameter of 165mm at a middle position of the preform as a representative diameter and was constant during the drawing. The glass preform was set so that a drawing start position of the usable region on the drawing start side was located above the heater middle position C by 159mm and a drawing was started at a heater temperature of 2050 degrees Celsius. A diameter portion larger than 150mm of the tapered portion on the drawing start side was drawn at a drawing speed calculated using the formula (1) while a target diameter of the portion was set to the 150 mm glass rod target diameter.

A feed amount of the glass preform was set to 0mm at the time point that the 200mm length of preliminarily heated region passed through the heater middle position C, and the glass preform was fed by a feed amount of 1000mm. During this time, a drawing speed v2 at a given position in the usable region was calculated by the formula (1) using a diameter at an actual feed position of the preform, which is located at the heater middle position C. Another 200mm length of region was further drawn after drawing of the usable region. A diameter portion larger than 150mm of the tapered portion on the drawing start side was drawn at a drawing speed calculated using the formula (1) while a target diameter of the potion was set to the 150 mm glass rod target diameter. As a result, as shown in Fig.6, a difference between a maximum diameter and a minimum diameter in the diameter fluctuation of the drawn glass rod was approximately 3.1mm, and the diameter fluctuation of the drawn glass rod was larger than that of Example 1.

Comparative Example 2

A glass preform having tapered portions at both ends thereof, a 1000mm length usable region of the glass preform, a diameter of 161mm at a drawing start position of the usable region, a diameter of 172mm at a drawing ending position of the usable region, and a diameter in the usable region linearly varying in the longitudinal direction was drawn under conditions where a heater length is 130mm, a glass rod target diameter is a 150mm, and a feed speed is 10mm/min. No preliminarily heated region on the drawing start side was set. Drawing reference distances on the drawing start side and on the drawing ending side were set to 35mm and 53mm determined from the data of Fig.3A, respectively. The glass preform was set so that a drawing start position of the usable region on the drawing start side is located below the heater middle position C by 35mm and a drawing was started at a heater temperature of 2050 degrees Celsius.

A feed amount of the glass preform at the heater middle position C when starting drawing was set to 0mm From here, the glass preform was moved 1018mm. The feed amount of 1018mm was determined from the usable region length of 1000mm + (the ending position drawing reference distance of 53mm - the start position drawing reference distance of 35mm). During this time, a diameter acquisition distance with respect to a given position on the preform was interpolated by multiplying an actual feed amount of the glass preform by 1000/1018. And, a drawing speed V2 at a given position in the usable region was calculated by the formula (1) using a diameter acquired at the interpolated diameter acquisition distance from the measured diameter data of the glass preform. In addition, another 200mm length of region was further drawn after a drawing of the usable region. A diameter portion larger than 150mm of the tapered portion on the drawing start side was drawn at a drawing speed calculated using the formula (1) while a target diameter of the potion was set to the 150 mm glass rod target diameter. As a result, as shown in Fig.7, a large diameter fluctuation having a range of from +2mm to -5mm was generated on the drawing start side, and the diameter fluctuation was larger than that of Example 1.

Example 2

A glass preform having tapered portions at both ends thereof, a 1000mm length usable region of the glass rod, a diameter of 168mm at a drawing start position, a diameter of 172mm at a drawing ending position, and a diameter in the usable region varying in a wavy form in the longitudinal direction was drawn under conditions where a heater length is 130mm, a glass rod target diameter is a 150mm, and a feed speed is 10mm/min. A preliminarily heated region on the drawing start side was set to 200mm in length. Drawing reference distances with respect to a plurality of points located on the glass preform in the longitudinal direction at a regular interval of 100mm were set to 46,44,41,38,38,39,43,46,49,52 and 52mm from the start end side of the glass preform, which were determined from diameters at the plurality of points and the data of Fig.3A. The glass preform was set so that a drawing start position of the usable region on the drawing start side was located above the heater middle position C by 154mm and a drawing was started at a heater temperature of 2050 degrees Celsius. A diameter portion larger than 150mm of the tapered portion on the drawing start side was drawn at a drawing speed calculated using the formula (1) while a target diameter of the portion was set to the 150 mm glass rod target diameter.

A feed amount of the glass preform was set to 0mm at the time point that the 200mm length of preliminarily heated region passed through the heater middle position C, and the glass preform was moved 98mm. The first feed amount of 98mm was determined from the interval of 100mm + (the drawing reference distance of 52mm at the second point of the plurality of points - the drawing reference distance of 33mm the first position of the plurality of points). During this time, a diameter acquisition distance with respect to a given position on the preform between the first and second position was interpolated by multiplying an actual feed amount of the glass preform by 100/98. And, a drawing speed was calculated by the formula (1) using a diameter acquired at the interpolated diameter acquisition distance from the measured diameter data of the glass preform. The drawing was continued to the end of the usable region of the preform so that a drawing speed was sequentially determined in the same way at each interpolation region between two points lying to next to each other among the plurality of points. In addition, another 200mm length region was further drawn after the drawing of the usable region. The diameter portion larger than 150mm of the tapered portion on the drawing ending side was drawn at a drawing speed calculated using the formula (1) while a target diameter of the portion was set to the 150 mm. As a result, as shown in Fig.8, a significantly reduced diameter fluctuation, in which a difference between a maximum diameter and a minimum diameter is approximately 0.9mm, could be obtained.

[Industrial Applicability]

According to the present invention, a diameter fluctuation of a drawn glass rod in a longitudinal direction can be suppressed when drawing at a relatively large diameter reduction ratio.

## Claims

1. A method of fabricating a glass rod by feeding a first diameter glass preform (201) into a furnace (120) through a top portion thereof and drawing the glass preform (201) from the furnace (120) through a bottom portion thereof so that the first diameter glass preform (201) is drawn into a second diameter glass rod (203), the second diameter being smaller than the first diameter, comprising the steps of:

    setting (S5) a feed speed (V1) of the glass preform (201) to a constant value;

acquiring (S6, S7) a diameter of the glass preform (201) for each diameter acquisition position defined with respect to a predetermined reference position of the furnace (121) as a diameter (D) of the glass preform (201) for determining a drawing speed (V2) from pre-measured diameter data of the glass preform (201) before being drawn, and

determining (S8) a drawing speed (V2) of the glass preform (201) so that a ratio (V2/V1) between the feed speed (V1) and the drawing speed (V2) becomes a value ($(D/d)^2$) determined based on each acquired diameter (D) of the glass preform (201) and a target diameter (d) of the glass rod (203) ;

wherein, at the acquiring step (S6, S7), a drawing reference distance (L) from the predetermined reference position to the diameter acquisition position is defined so as to vary depending on a fluctuation of the pre-measured diameter data of the glass preform before being drawn in a longitudinal direction thereof.

**2.** The method of claim 1, wherein in the step of acquiring the diameter (D), the diameter acquisition position is defined so as to become equal to the drawing reference distance (L) of the glass preform, and the drawing reference distance (L) is defined as a distance from the reference position (C) of the furnace to a position defined depending on a deformation rate of a diameter decreasing region of the glass preform during drawing, and the drawing reference distance (L) varies depending on the diameter before being drawn or the feed speed of the glass preform.

**3.** The method of claim 2, wherein drawing reference distances at first and second positions on the glass preform to be drawn in a longitudinal direction thereof are determined based on a relation data between a diameter of the preform before being drawn and a measured drawing reference distance, and a drawing reference distance at a given position between the first and second positions is determined by interpolating the determined drawing reference distances with respect to the first and second positions.

**4.** The method of any of claims 2 and 3, wherein an amount of change of the drawing reference distance with respect to a variation of the diameter before drawn or the feed speed of the glass preform differs depending on a diameter reduction ratio, the diameter reduction ratio being defined as a ratio (d/D) between the diameter (D) before drawn and the target diameter (d).

**5.** The method of claim 4, wherein the diameter reduction ratio is within 60 to 95%.

**6.** The method of any of claims 4 and 5, wherein the glass rod target diameter (d) is set to equal to or more than 110mm.

**7.** The method of any of claims 1 to 6, further comprising a step of starting to heat the glass preform before a drawing starting position of a usable region in the glass preform reaches the reference position of the furnace, wherein a distance between a position for starting to heat the glass preform and the drawing starting position of the usable region is set to equal to or more than a length of a heater in the furnace in a longitudinal direction and less than three times of the length.

**8.** An apparatus for fabricating a glass rod, comprising:

a furnace (120);

a feeding mechanism (101) for feeding a first diameter glass preform (201) into a furnace through a top portion thereof;

a drawing mechanism (110) for drawing the glass preform from the furnace through a bottom portion thereof so that the first diameter glass preform is drawn into a second diameter glass rod (203), the second diameter being smaller than the first diameter;

a controller (130) comprising

a setting unit for setting the feed speed (V1) of the glass preform (201) to a constant value; and

an acquisition unit for acquiring the diameter (D) of the glass preform (201) for each diameter acquisition position defined with respect to a predetermined reference position of the furnace (121) as a diameter (D) of the glass preform (201) for determining a drawing speed (V2) from pre-measured diameter data of the glass preform (201) before being drawn,

the controller (130) being adapted for determining a drawing speed (V2) of the glass preform (201) by the drawing mechanism so that a ratio (V2/V1) between the feed speed (V1) and the drawing speed (V2) becomes a value ($(D/d)^2$) determined based on each acquired diameter (D) of the glass preform (201) and a target diameter (d) of the glass rod (203),

wherein the acquisition unit, when acquiring the diameter (D), defines a drawing reference distance (L) from the predetermined reference position to the diameter acquisition position so as to vary depending on a fluctuation of the pre-measured diameter data of the glass preform before being drawn in a longitudinal direction thereof.

**Patentansprüche**

1. Verfahren zur Herstellung eines Glasstabes durch Zuführen einer Glasvorform (201) mit einem ersten Durchmesser in einen Ofen (120) durch einen oberen Abschnitt davon und Ziehen der Glasvorform (201) aus dem Ofen (120) durch einen unteren Abschnitt davon, so dass die Glasvorform (201) mit dem ersten Durchmesser in eine Glasvorform (203) mit dem zweiten Durchmesser gezogen wird, wobei der zweite Durchmesser kleiner ist als der erste Durchmesser, umfassend die Schritte:

   Einstellen (S5) einer Vorschubgeschwindigkeit (V1) der Glasvorform (201) auf einen konstanten Wert;
   Erfassen (S6, S7) eines Durchmessers der Glasvorform (201) für jede Durchmessererfassungsposition, die in Bezug auf eine vorbestimmte Referenzposition des Ofens (121) als Durchmesser (D) der Glasvorform (201) zum Bestimmen einer Ziehgeschwindigkeit (V2) aus vorab gemessenen Durchmesserdaten der Glasvorform (201) vor dem Ziehen definiert ist, und
   Bestimmen (S8) einer Ziehgeschwindigkeit (V2) der Glasvorform (201), so dass ein Verhältnis (V2/V1) zwischen der Vorschubgeschwindigkeit (V1) und der Ziehgeschwindigkeit (V2) einen Wert ($(D/d)^2$) annimmt, der basierend auf jedem erfassten Durchmesser (D) der Glasvorform (201) und einem Zieldurchmesser (d) des Glasstabes (203) bestimmt wird;
   wobei bei dem Erfassungsschritt (S6, S7) ein Ziehreferenzabstand (L) zwischen der vorbestimmten Referenzposition und der Durchmessererfassungsposition so eingestellt wird, dass sie gemäß einer Schwankung der vorab gemessenen Durchmesserdaten der Glasvorform variiert, bevor sie in ihre Längsrichtung gezogen wird.

2. Verfahren nach Anspruch 1, wobei bei dem Schritt der Erfassung des Durchmessers (D) die Durchmessererfassungsposition so definiert wird, dass sie gleich dem Ziehreferenzabstand (L) der Glasvorform ist, und der Ziehreferenzabstand (L) definiert ist als ein Abstand zwischen der Bezugsposition (C) des Ofens zu einer Position, die in Abhängigkeit von einer Verformungsrate eines abnehmenden Bereichs des Durchmessers der Glasvorform während des Ziehens definiert ist, und der Ziehreferenzabstand (L) in Abhängigkeit von dem Durchmesser vor dem Strecken oder der Vorschubgeschwindigkeit der Glasvorform variiert.

3. Verfahren nach Anspruch 2, wobei Ziehreferenzabstände an ersten und zweiten Positionen auf der in der Längsrichtung zu ziehenden Glasvorform basierend auf Bezugsdaten zwischen einem Durchmesser der Vorform vor dem Ziehen und einem gemessenen Ziehreferenzabstand bestimmt werden, und ein Ziehreferenzabstand an einer gegebenen Position zwischen der ersten und der zweiten Position durch Interpolation der bestimmten Ziehreferenzabstände in Bezug zu der ersten und der zweiten Position bestimmt wird.

4. Verfahren nach einem der Ansprüche 2 oder 3, wobei sich ein Änderungsbetrag des Ziehreferenzabstands in Bezug auf eine Variation des Durchmessers vor dem Ziehen oder der Vorschubgeschwindigkeit der Glasvorform in Abhängigkeit von einem Durchmesserverringerungsverhältnis unterscheidet, wobei das Durchmesserverringerungsverhältnis definiert ist als ein Verhältnis (d/D) zwischen dem Durchmesser (D) vor dem Ziehen und dem Zieldurchmesser (d).

5. Verfahren nach Anspruch 4, wobei das Durchmesserverringerungsverhältnis zwischen 60 und 95% liegt.

6. Verfahren nach einem der Ansprüche 4 oder 5, wobei der Zieldurchmesser (d) des Glasstabs auf 110 mm oder mehr eingestellt ist.

7. Verfahren nach einem der Ansprüche 1 bis 6, ferner umfassend einen Schritt des Startens zum Erwärmen der Glasvorform, bevor eine Ziehstartposition eines verwendbaren Bereichs in der Glasvorform die Referenzposition des Ofens erreicht, wobei ein Abstand zwischen einer Position zum Starten des Erwärmens der Glasvorform und der Ziehstartposition des verwendbaren Bereichs auf eine Länge eingestellt wird, die gleich oder größer ist als eine Länge eines Erhitzers im Ofen in einer Längsrichtung und kleiner ist als das Dreifache der Länge.

8. Vorrichtung zur Herstellung eines Glasstabes, umfassend:

   einen Ofen (120);
   einen Zuführmechanismus (101) zum Zuführen einer Glasvorform (201) mit einem ersten Durchmesser in einen Ofen durch einen oberen Abschnitt davon;
   einen Ziehmechanismus (110) zum Ziehen der Glasvorform von dem Ofen durch einen Bodenabschnitt davon, so dass die Glasvorform mit dem ersten Durchmesser in eine Glasvorform (203) mit einem zweiten Durchmesser gezogen wird, und der zweite Durchmesser kleiner ist als der erste Durchmesser;

eine Steuerung (130) umfassend
eine Einstelleinheit zum Einstellen der Vorschubgeschwindigkeit (V1) der Glasvorform (201) auf einen konstanten Wert; und
eine Erfassungseinheit zum Erfassen des Durchmessers (D) der Glasvorform (201) für jede Durchmessererfassungsposition, die in Bezug auf eine vorbestimmte Referenzposition des Ofens (121) als ein Durchmesser (D) der Glasvorform (201) definiert ist, zum Bestimmen einer Ziehgeschwindigkeit (V2) aus vorab gemessenen Durchmesserdaten der Glasvorform (201) vor dem Ziehen,
wobei die Steuerung (130) dazu angepasst ist, eine Ziehgeschwindigkeit (V2) der Glasvorform (201) durch den Ziehmechanismus zu bestimmen, so dass ein Verhältnis (V2/V1) zwischen der Vorschubgeschwindigkeit (V1) und der Ziehgeschwindigkeit (V2) einen Wert ($(D/d)^2$) annimmt, der basierend auf jedem erfassten Durchmesser (D) der Glasvorform (201) und einem Zieldurchmesser (d) des Glasstabes (203) ermittelt wird,
wobei die Erfassungseinheit beim Erfassen des Durchmessers (D) einen Ziehreferenzabstand (L) von einer vorbestimmten Referenzposition zu der Durchmessererfassungsposition definiert, um in Abhängigkeit von einer Schwankung der vorab gemessenen Durchmesserdaten der Glasvorform zu variieren, bevor er in eine Längsrichtung davon gezogen wird.

## Revendications

**1.** Procédé de fabrication d'une tige de verre en alimentant une préforme de verre de premier diamètre (201) dans un four (120) à travers une partie supérieure de celui-ci et en étirant la préforme de verre (201) du four (120) à travers une partie inférieure de celui-ci de sorte que la préforme de verre de première diamètre (201) est étirée dans une préforme de verre de deuxième diamètre (203), le deuxième diamètre étant inférieur au premier diamètre, comprenant les étapes consistant à :

régler (S5) une vitesse d'alimentation (V1) de la préforme de verre (201) à une valeur constante ;
acquérir (S6, S7) un diamètre de la préforme de verre (201) pour chaque position d'acquisition de diamètre définie par rapport à une position de référence prédéterminée du four (121) en tant que diamètre (D) de la préforme de verre (201) pour déterminer une vitesse d'étirage (V2) à partir de données pré mesurées de diamètre de la préforme de verre (201) avant d'être étirée, et
déterminer (S8) une vitesse d'étirage (V2) de la préforme de verre (201) de sorte qu'un rapport (V2/V1) entre la vitesse d'alimentation (V1) et la vitesse d'étirage (V2) devient une valeur ($(D/d)^2$) déterminée en fonction de chaque diamètre acquis (D) de la préforme de verre (201) et un diamètre cible (d) de la tige de verre (203) ;
dans lequel, à l'étape d'acquisition (S6, S7), une distance de référence d'étirage (L) entre la position de référence prédéterminée et la position d'acquisition de diamètre est définie de manière à varier en fonction d'une fluctuation des données de diamètre pré-mesurées de la préforme de verre avant d'être étirée dans une direction longitudinale de celle-ci.

**2.** Procédé selon la revendication 1, dans lequel, dans l'étape d'acquisition du diamètre (D), la position d'acquisition de diamètre est définie de manière à devenir égale à la distance de référence d'étirage (L) de la préforme de verre, et la distance de référence d'étirage (L) est définie comme une distance entre la position de référence (C) du four et une position définie selon un taux de déformation d'une région décroissante de diamètre de la préforme de verre durant l'étirage et la distance de référence d'étirage (L) varie selon le diamètre avant d'être étirée ou la vitesse d'alimentation de la préforme de verre.

**3.** Procédé selon la revendication 2, dans lequel des distances de référence d'étirage en première et deuxième positions sur la préforme de verre à étirée dans une direction longitudinale de celle-ci sont déterminées, sur la base de données de relation entre un diamètre de la préforme avant d'être étirée et une distance de référence d'étirage mesurée, et une distance de référence d'étirage en une position donnée entre les première et deuxième positions est déterminée par interpolation des distances de références d'étirage déterminées par rapport aux première et deuxième positions.

**4.** Procédé selon l'une quelconque des revendications 2 et 3, dans lequel une quantité de changement de la distance de référence d'étirage par rapport à une variation du diamètre avant l'étirage ou la vitesse d'alimentation de la préforme de verre diffère selon un rapport de réduction de diamètre, le rapport de réduction de diamètre étant défini comme un rapport (d/D) entre le diamètre (D) avant étirage et le diamètre cible (d).

**5.** Procédé selon la revendication 4, dans lequel le rapport de réduction de diamètre est compris entre 60 et 95 %.

**6.** Procédé selon l'une quelconque des revendications 4 et 5, dans lequel le diamètre cible (d) de tige de verre est réglé à une valeur égale ou supérieure à 110 mm.

**7.** Procédé selon l'une quelconque des revendications 1 à 6, comprenant en outre une étape consistant à commencer à chauffer la préforme de verre avant qu'une position de départ d'étirage d'une région utilisable dans la préforme de verre atteigne la position de référence du four, dans lequel une distance entre une position pour commencer à chauffer la préforme de verre et la position de départ d'étirage de la région utilisable est réglée à une longueur égale ou supérieure à une longueur de chauffage dans le four dans une direction longitudinale et inférieure à trois fois cette longueur.

**8.** Dispositif pour la fabrication d'une tige de verre, comprenant :

un four (120) ;
un mécanisme d'alimentation (101) pour alimenter une préforme de verre de premier diamètre (201) dans un four par une partie supérieure de celui-ci ;
un mécanisme d'étirage (110) pour étirer la préforme de verre du four à travers une partie inférieure de celui-ci de sorte que le premier diamètre de préforme de verre est étiré dans un deuxième diamètre de préforme de verre (203), le deuxième diamètre étant plus petit que le premier diamètre ;
un contrôleur (130) comprenant
une unité de réglage pour régler la vitesse d'alimentation (V1) de la préforme de verre (201) à une valeur constante ; et
une unité d'acquisition pour acquérir le diamètre (D) de la préforme de verre (201) pour chaque position d'acquisition de diamètre définie par rapport à une position de référence prédéterminée du four (121) en tant que diamètre (D) de la préforme de verre (201) pour déterminer une vitesse d'étirage (V2) à partir de données prémesurées de diamètre de la préforme de verre (201) avant d'être étirée,
le contrôleur (130) étant adapté pour déterminer une vitesse d'étirage (V2) de la préforme de verre (201) par le mécanisme d'étirage de sorte qu'un rapport (V2/V1) entre la vitesse d'alimentation (V1) et la vitesse d'étirage (V2) devient une valeur ($(D/d)^2$) déterminée en fonction de chaque diamètre acquis (D) de la préforme de verre (201) et un diamètre cible (d) de la tige de verre (203),
dans lequel l'unité d'acquisition, lors de l'acquisition de diamètre (D), définit une distance de référence d'étirage (L) d'une position de référence prédéterminée à la position d'acquisition de diamètre de manière à varier en fonction d'une fluctuation des données de diamètre prémesurées de la préforme de verre avant d'être étirées dans une direction longitudinale de celle-ci.

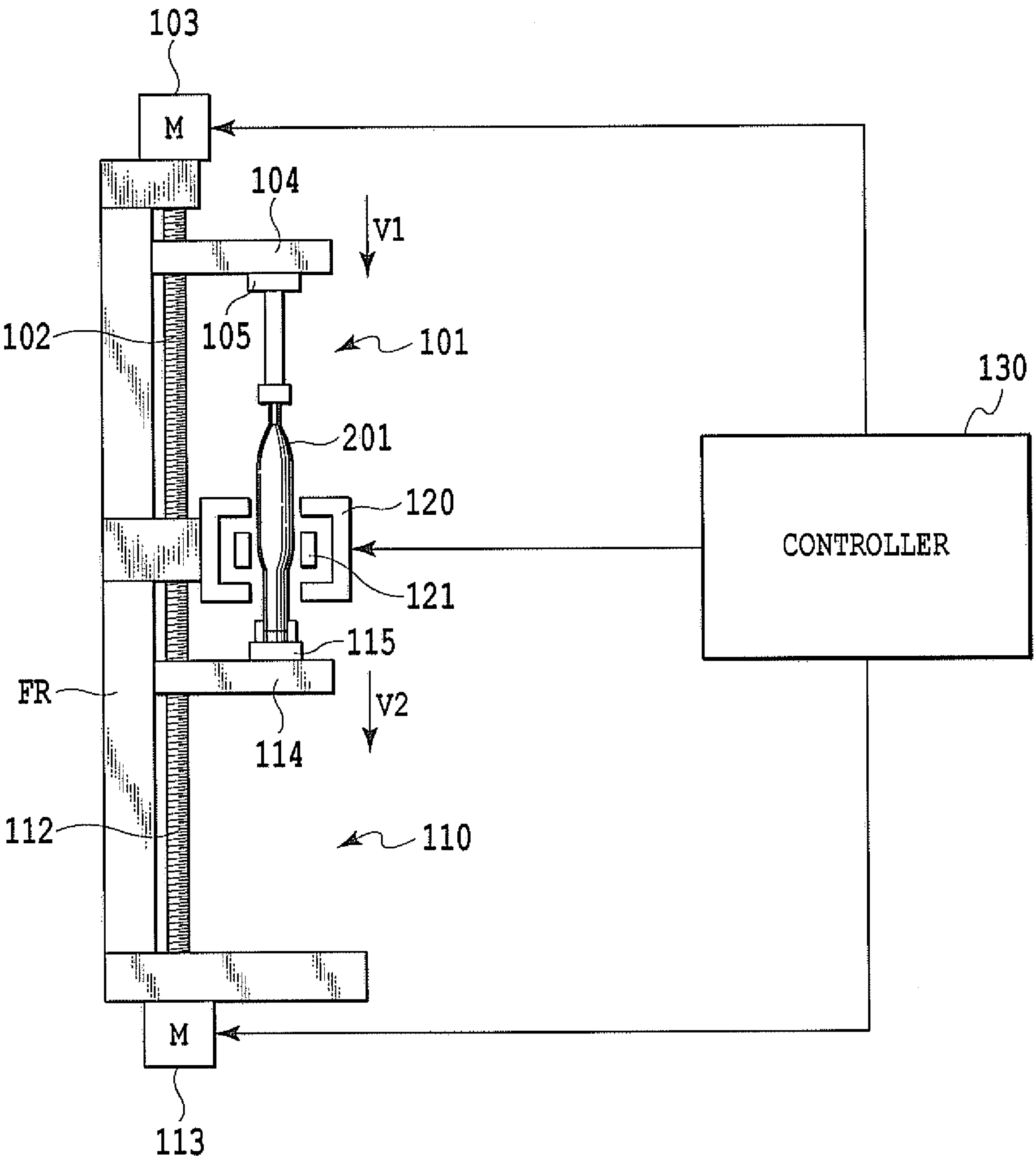
103
M
104
V1
102
105
101
130
201
120
CONTROLLER
121
115
FR
V2
114
112
110
M
113

FIG.1

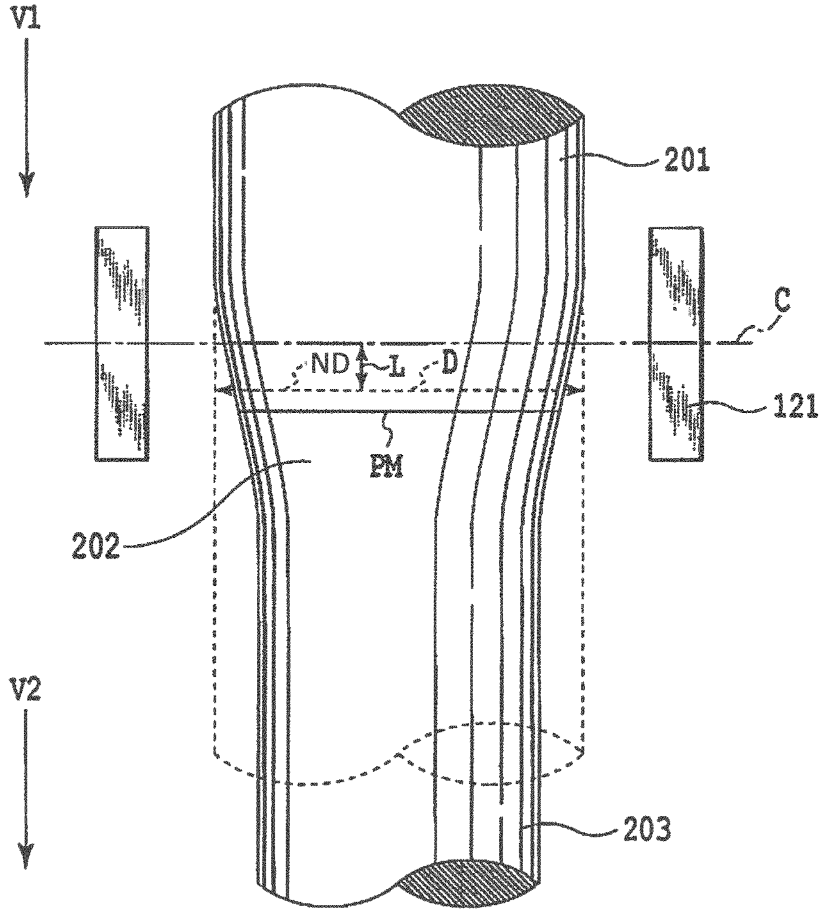


FIG.2

FIG.3A

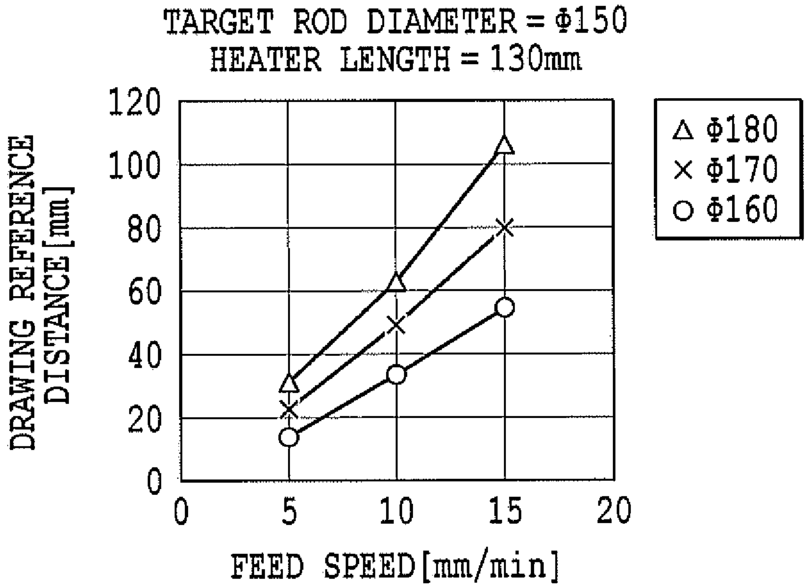
TARGET ROD DIAMETER = Φ150
HEATER LENGTH = 130mm
DRAWING REFERENCE DISTANCE [mm]
120
100
80
60
40
20
0
0
5
10
15
20
FEED SPEED [mm/min]
Δ Φ180
× Φ170
○ Φ160

FIG.3B

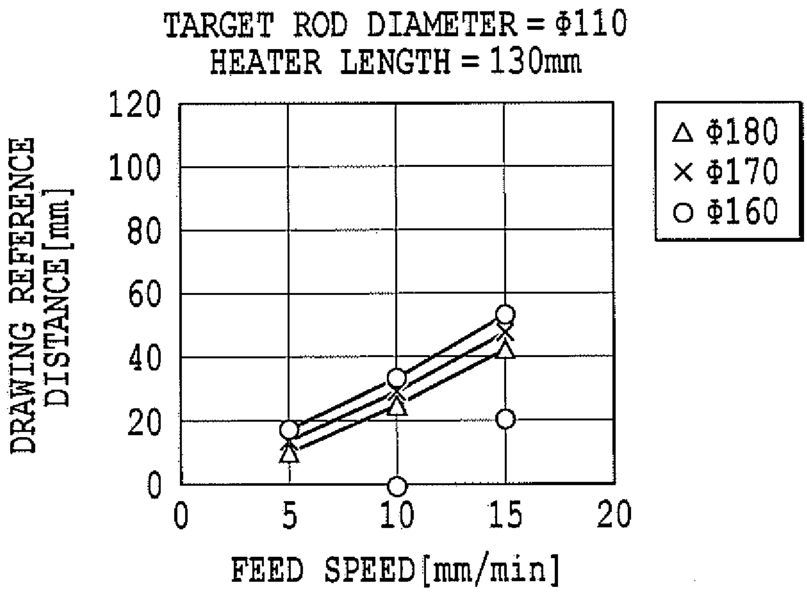
TARGET ROD DIAMETER = Φ110
HEATER LENGTH = 130mm
DRAWING REFERENCE DISTANCE [mm]
120
100
80
60
40
20
0
0
5
10
15
20
FEED SPEED [mm/min]
Δ Φ180
× Φ170
○ Φ160

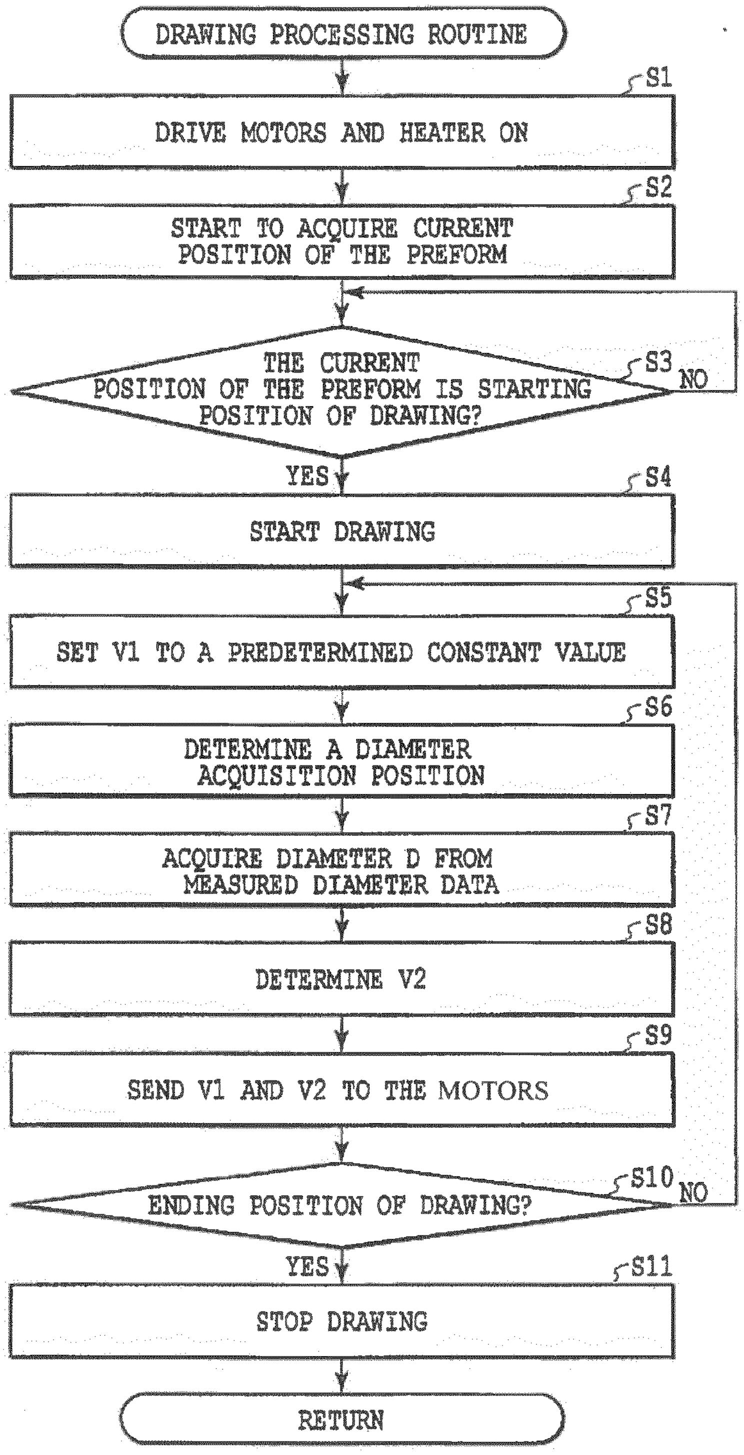
DRAWING PROCESSING ROUTINE
S1
DRIVE MOTORS AND HEATER ON
S2
START TO ACQUIRE CURRENT POSITION OF THE PREFORM
S3
THE CURRENT POSITION OF THE PREFORM IS STARTING POSITION OF DRAWING?
NO
YES
S4
START DRAWING
S5
SET V1 TO A PREDETERMINED CONSTANT VALUE
S6
DETERMINE A DIAMETER ACQUISITION POSITION
S7
ACQUIRE DIAMETER D FROM MEASURED DIAMETER DATA
S8
DETERMINE V2
S9
SEND V1 AND V2 TO THE MOTORS
S10
ENDING POSITION OF DRAWING?
NO
YES
S11
STOP DRAWING
RETURN

FIG.4

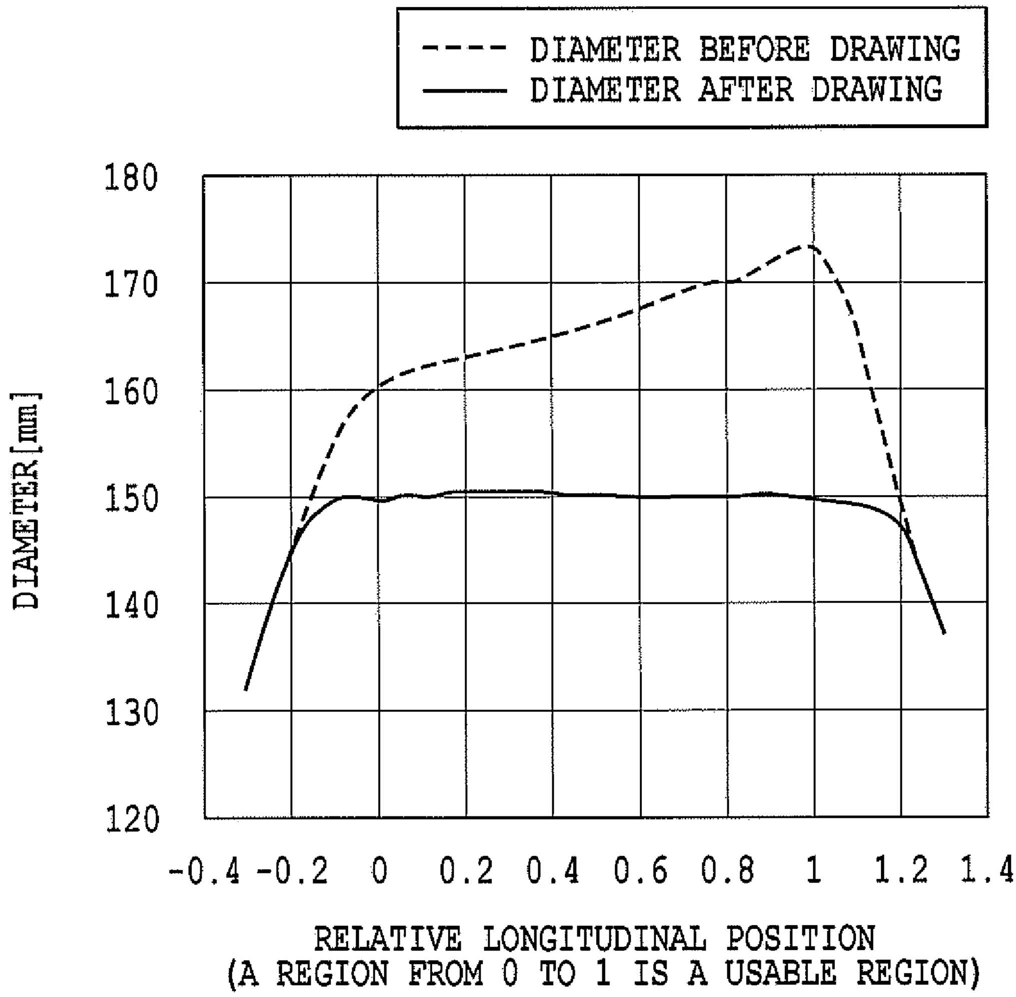

---- DIAMETER BEFORE DRAWING
—— DIAMETER AFTER DRAWING
180
170
160
150
140
130
120
DIAMETER[mm]
-0.4
-0.2
0
0.2
0.4
0.6
0.8
1
1.2
1.4
RELATIVE LONGITUDINAL POSITION
(A REGION FROM 0 TO 1 IS A USABLE REGION)


FIG.5

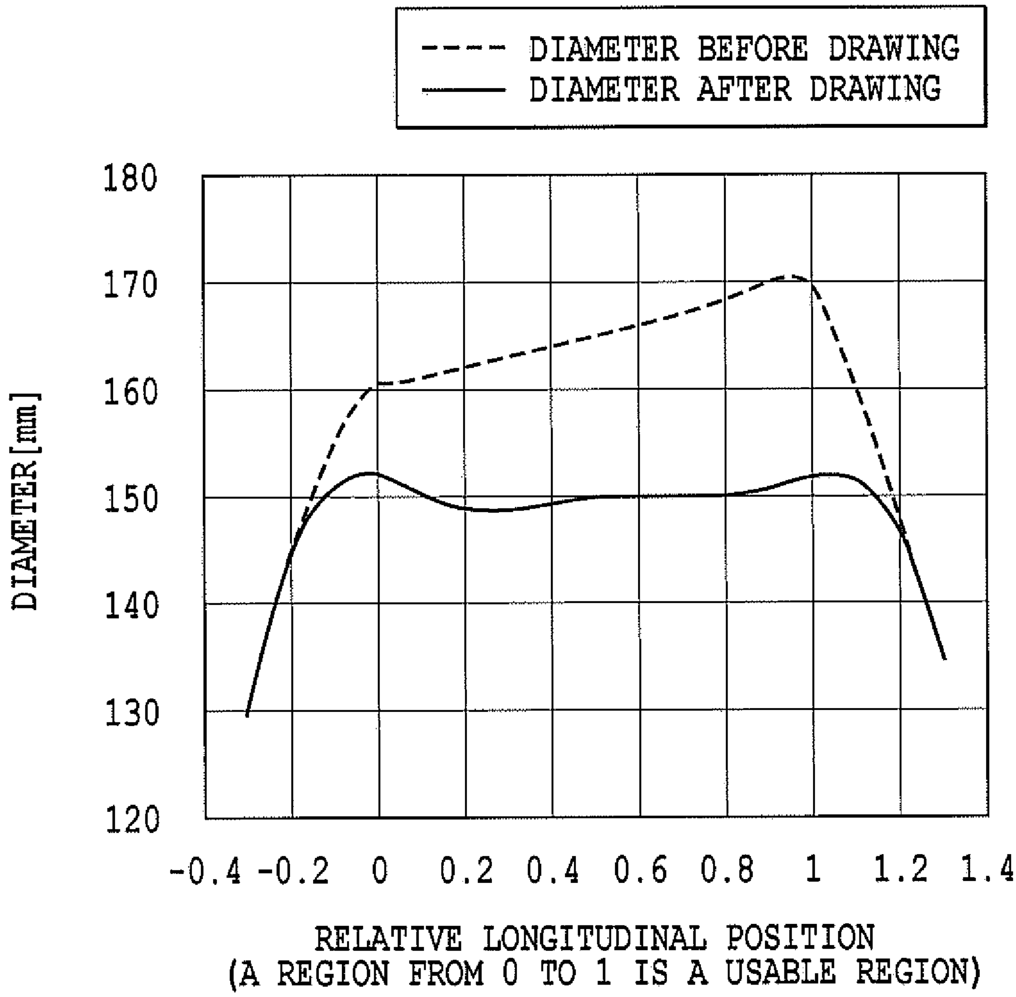

DIAMETER BEFORE DRAWING
DIAMETER AFTER DRAWING
180
170
160
150
140
130
120
DIAMETER [mm]
-0.4 -0.2 0 0.2 0.4 0.6 0.8 1 1.2 1.4
RELATIVE LONGITUDINAL POSITION
(A REGION FROM 0 TO 1 IS A USABLE REGION)


FIG.6

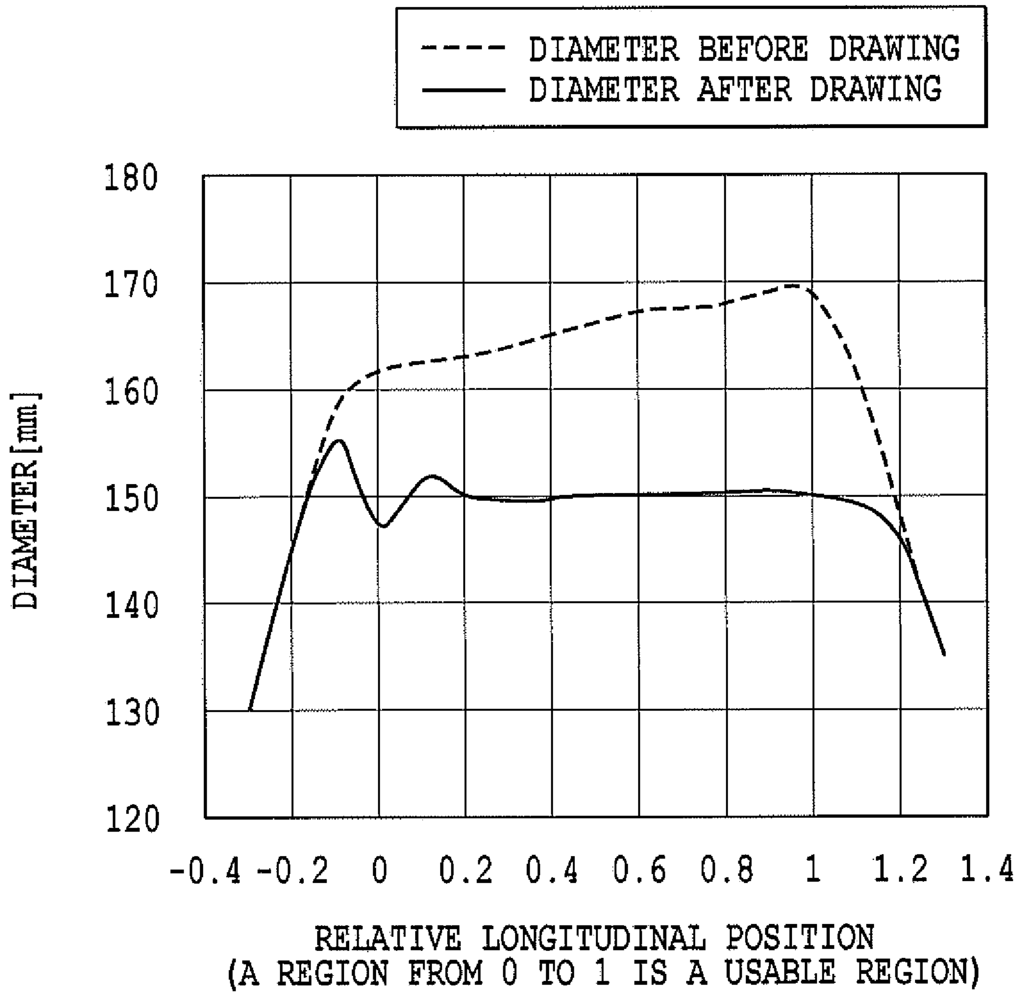
DIAMETER BEFORE DRAWING
DIAMETER AFTER DRAWING
DIAMETER [mm]
180
170
160
150
140
130
120
-0.4
-0.2
0
0.2
0.4
0.6
0.8
1
1.2
1.4
RELATIVE LONGITUDINAL POSITION
(A REGION FROM 0 TO 1 IS A USABLE REGION)

FIG.7

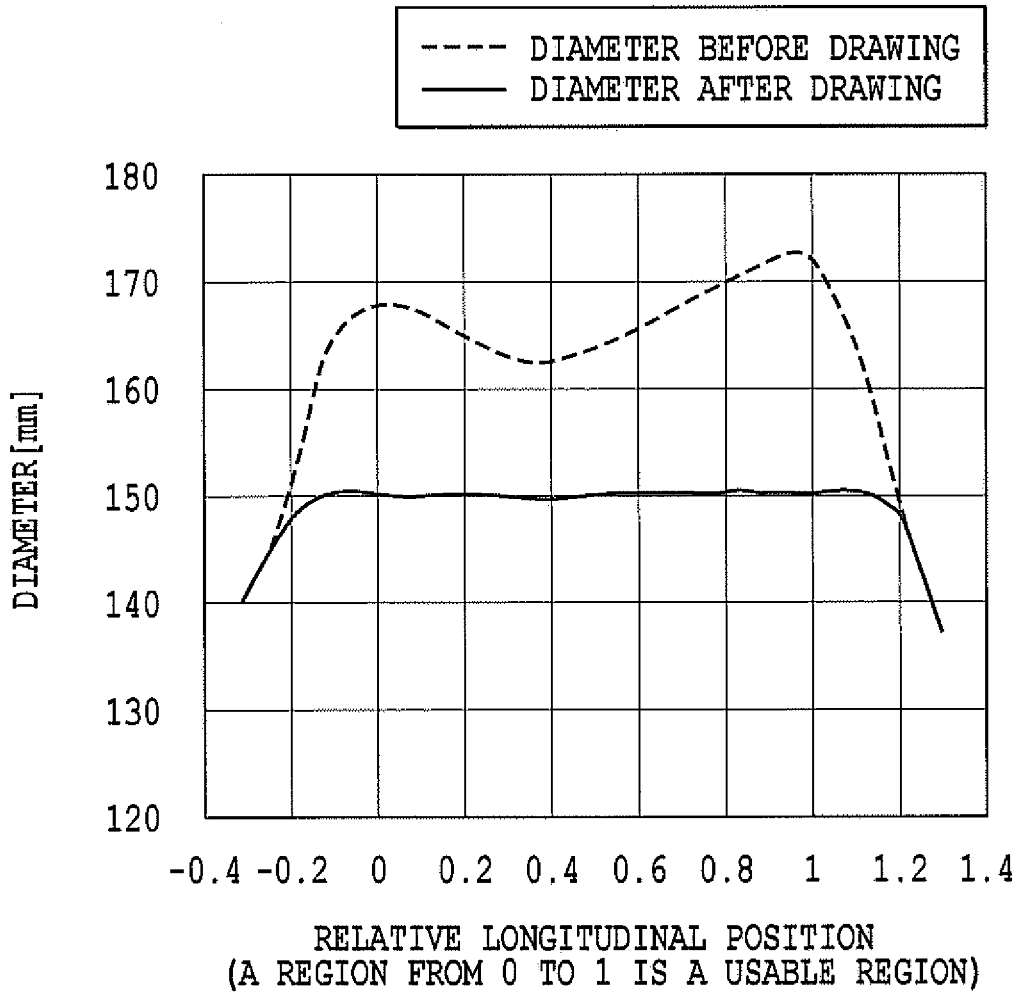

---- DIAMETER BEFORE DRAWING
DIAMETER AFTER DRAWING
180
170
160
150
140
130
120
DIAMETER [mm]
-0.4 -0.2 0 0.2 0.4 0.6 0.8 1 1.2 1.4
RELATIVE LONGITUDINAL POSITION
(A REGION FROM 0 TO 1 IS A USABLE REGION)


FIG.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006193397 A
- JP H110119701999 B
- JP 2006219331 A
- JP 61014149 A
- US 6134922 A